# EUROPÄISCHE PATENTSCHRIFT

(11) **EP 2 130 704 B1**
(45) Veröffentlichungstag und Bekanntmachung des Hinweises auf die Patenterteilung: **02.07.2014**
(21) Anmeldenummer: 09007243.0
(22) Anmeldetag: 29.05.2009
(51) Int. Cl.: B60J 5/06

(54) **Trägerelement für bewegliche Elemente eines Nutzfahrzeugaufbaus und Nutzfahrzeugaufbau mit einem derartigen Trägerelement**
Holder element for moving elements of a commercial vehicle structure and commercial vehicle structure with such a holder element
Elément de support pour éléments mobiles d'une structure de véhicule utilitaire et structure de véhicule utilitaire dotée d'un tel élément de support

(30) Priorität: 06.06.2008 DE 202008007592 U; 13.06.2008 DE 202008007930 U
(43) Veröffentlichungstag der Anmeldung: 09.12.2009
(73) Patentinhaber: Kögel Trailer GmbH & Co. KG, 89349 Burtenbach (DE)
(72) Erfinder: Kreis, Reinhard, 89356 Haldenwang (DE)
(74) Vertreter: Kilchert, Jochen

(56) Entgegenhaltungen:
- DE-A1- 19 720 525
- FR-A1- 2 842 464
- GB-A- 2 093 099

## Beschreibung

Die Erfindung bezieht sich auf ein Trägerelement für bewegliche Elemente eines Nutzfahrzeugaufbaus und insbesondere auf einen Planenlaufroller für Schiebeplanen. Ein Planenlaufroller mit den Merkmalen des Oberbegriffs des Anspruchs 1 wird von der Anmelderin in den von ihr hergestellten Nutzfahrzeugaufbauten benutzt und ist bekannt.

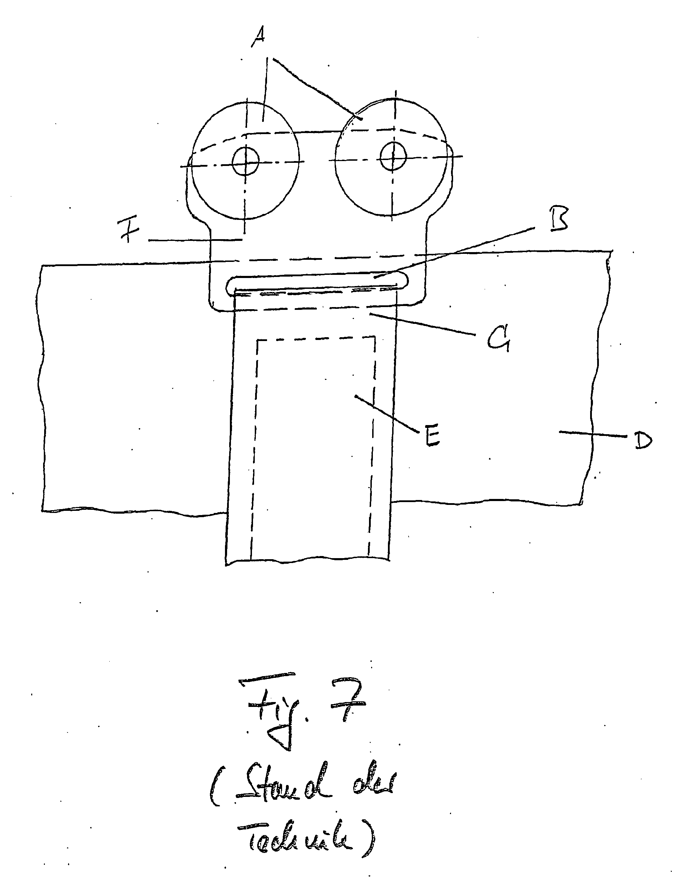

Dieser Planenlaufroller ist in Fig. 7 dargestellt und weist zwei Laufrollen A auf, die an einer Platte F befestigt sind. An der Unterseite der Platte F ist eine Öffnung B vorgesehen, durch die eine Gurtschlaufe C hindurchgeführt ist. Die Gurtschlaufe C bildet das Ende eines Gurtes E, der mit einer Schiebeplane D vernäht und verklebt ist. Auf diese Weise ist die Schiebeplane D mit der Platte F des Planenlaufrollers verbunden und kann entlang des Aufbaus zum Öffnen und Schließen bewegt werden.

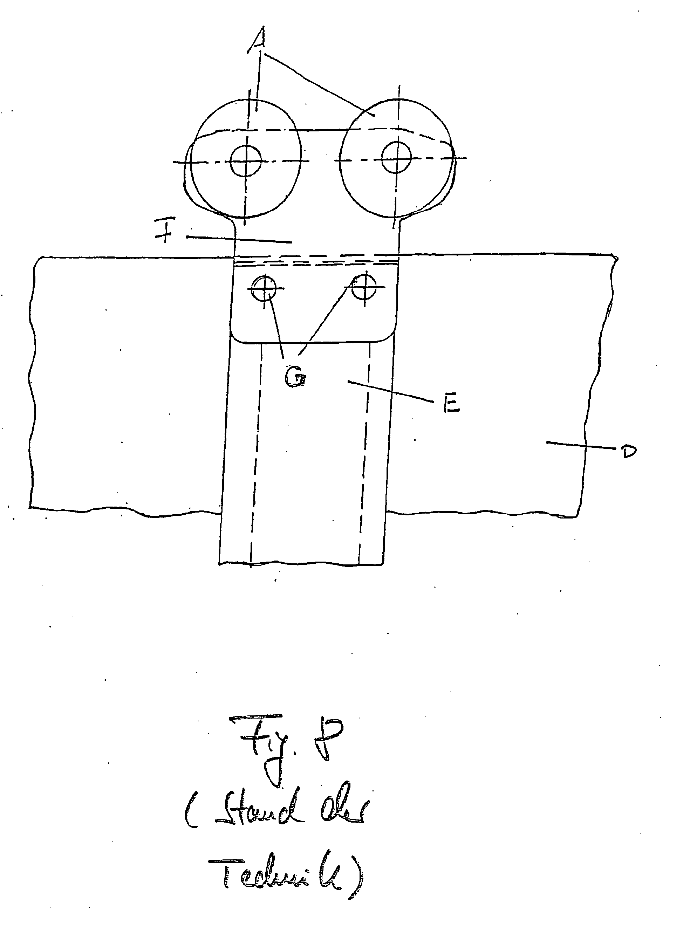

Der Austausch des Planenlaufrollers gemäß Fig. 7 zu Reparaturzwecken, beispielsweise wenn eine der beiden Laufrollen A versagt, ist schwierig. Eine mögliche Reparaturlösung ist in Fig. 8 dargestellt. Dabei wird ein neuer Planenlaufroller vorgesehen, dessen Platte F direkt mit dem Gurt E und der Schiebeplane D durch Nieten G verbunden wird. Aufgrund der Nietverbindung ist die Kraftübertragung von der Schiebeplane D über den Gurt E auf den Planenlaufroller ungünstig.

DE 197 20 525 A1 beschreibt einen Planenroller, wobei die Verbindung zwischen dem Planenroller und einer Seitenplane direkt durch eine Klemmverbindung erfolgt. Dazu weist der Planenroller eine Lasche auf, die am oberen Ende eine Laufrollen trägt. Das untere Ende der Lasche ist entweder gabelartig bzw. zweiteilig ausgebildet, wobei die Lasche eine Backe und eine Zunge aufweist, zwischen denen ein Spalt ausgebildet ist. Die Zunge ist mit der Backe durch eine Feststellschraube verbunden. Zur Verbindung mit der Seitenplane wird die Verbindung zwischen der Zunge und der Backe gelöst. Die Seitenplane wird umgeschlagen, so dass sich eine Falte bildet, die in den Spalt zwischen der Backe und der Zunge eingelegt wird. Durch Festziehen der Feststellschraube wird die Falte zwischen der Zunge und der Backe festgeklemmt.

Der Nachteil des bekannten Plattenrollers besteht darin, dass durch die Klemmverbindung auf die Seitenplane Kräfte aufgebracht werden, die den Verschleiß der Seitenplane erhöhen. Dies gilt insbesondere da die Verbindung zwischen dem bekannten Plattenroller und der Seitenplane direkt erfolgt. Bei punktuellen Schäden der Seitenplane im Bereich eines Planenrollers ist daher ein vollständiger Austausch der Seitenplane oder eine aufwändige Reparatur der Seitenplane erforderlich, wodurch sich der Wartungsaufwand erhöht.

Der Erfindung liegt die Aufgabe zugrunde, ein Trägerelement für bewegliche Elemente eines Nutzfahrzeugaufbaus, insbesondere einen Planenlaufroller für Schiebeplanen anzugeben, der, insbesondere zu Reparaturzwecken, einfach austauschbar und/oder an verschiedene Planen bzw. an Toleranzabweichungen anpassbar ist. Ferner soll ein Nutzfahrzeugaufbau mit einem derartigen Trägerelement angegeben werden.

Erfindungsgemäß wird diese Aufgabe durch das Trägerelement, insbesondere den Planenlaufroller gemäß Anspruch 1 bzw. durch den Nutzfahrzeugaufbau gemäß Anspruch 14 gelöst.

Die Erfindung beruht auf dem Gedanken, ein Trägerelement für bewegliche Elemente eines Nutzfahrzeugaufbaus, insbesondere einen Planenlaufroller für Schiebeplanen anzugeben, der wenigstens eine Rolle aufweist, die mit einer Befestigungsplatte verbunden ist. Die Befestigungsplatte weist eine Öffnung zur Halterung einer Gurtschlaufe auf und ist im Bereich der Öffnung teilbar bzw. geteilt. Dies hat den Vorteil, dass die Gurtschlaufe aufgrund der im Bereich der Öffnung teilbaren Befestigungsplatte einfach vom Trägerelement bzw. vom Planenlaufroller getrennt bzw. mit diesem verbunden werden kann, ohne die Gurtschlaufe zu zerstören. Die Erfindung kann dabei als Reparaturlösung für Originallaufroller gemäß Fig. 7 eingesetzt werden. Zum Austausch eines solchen Originallaufrollers wird dessen Befestigungsplatte aufgeschnitten und die Gurtaufnahme aus der Gurtschlaufe herausgezogen, so dass die Gurtschlaufe und der Originallaufroller voneinander getrennt werden. Die Gurtschlaufe wird dabei nicht zerstört, sondern bleibt erhalten. Dann wird der erfindungsgemäße Planenlaufroller mittels der im Bereich der Öffnung teilbaren bzw. geteilten Befestigungsplatte in die Gurtschlaufe eingezogen und befestigt. Die Gurtschlaufe bleibt somit nach erfolgter Reparatur im Originalzustand erhalten.

Die günstige Kraftübertragung von der Schiebeplane über den Gurt bzw. allgemein vom beweglichen Element des Aufbaus auf den Planenlaufroller bzw. das Trägerelement wird bei der Erfindung beibehalten, da sich an der Halterung der Gurtschlaufe, zumindest was die Kontaktfläche zwischen der Befestigungsplatte und der Gurtschlaufe angeht, nichts ändert.

Evt. nachfolgende Reparaturmaßnahmen am erfindungsgemäßen Planenlaufroller erleichtern sich aufgrund der teilbaren Befestigungsplatte, da der erfindungsgemäße Planenlaufroller im Gegensatz zum Originallaufroller für den Austausch nicht aufgeschnitten werden muss. Es ist auch denkbar, den erfindungsgemäßen Planenlaufroller im Neuzustand der Plane als Originalteil einzusetzen, um die Reparaturfreundlichkeit zu verbessern.

Erfindungsgemäß weist die Befestigungsplatte ein Oberteil und ein Unterteil auf, wobei die wenigstens eine Rolle am Oberteil befestigt ist und das Unterteil zusammen mit dem Oberteil die Öffnung für die Gurtschlaufe bildet. Mittels des Oberteils und des Unterteils wird auf besonders einfache Weise die im Bereich der Öffnung teilbare Befestigungsplatte realisiert.

Das Unterteil kann bügelförmig ausgebildet sein, wodurch eine einfache Handhabung des Trägerelementes bei der Reparatur ermöglicht wird.

Das Unterteil kann bei einer weiteren Ausführungsform durch mechanische Verbindungsmittel mit dem Oberteil verbunden sein, insbesondere abnehmbar verbunden sein. Wenn ein Originalteil durch das Trägerelement bzw. den Planenlaufroller ausgetauscht werden soll, wird die Gurtschlaufe mit der im Bereich der Öffnung geteilten Befestigungsplatte verbunden, wobei das Unterteil und das Oberteil im Eingriff mit der Gurtschlaufe zusammengefügt und durch die mechanischen Verbindungsmittel verbunden werden. Für einen nachfolgenden Austausch des Planenlaufrollers werden die mechanischen Verbindungsmittel gelöst und das Unterteil vom Oberteil abgenommen. Damit ist die Öffnung zugänglich und die Gurtschlaufe kann aus der Öffnung entfernt werden. Diese Ausführungsform zeichnet sich durch eine einfache Bedienbarkeit aus und ist robust.

Erfindungsgemäß ist ein erstes Längsende des Unterteils fest mit dem Oberteil verbunden. Ein zweites Längsende bildet mit dem Oberteil einen Spalt. Dies hat den Vorteil, dass das Unterteil bei der Montage und Demontage des Trägerelements bzw. Planenlaufrollers am Oberteil verbleibt, so dass das Bauteil einfach zu handhaben ist. Die Entfernung bzw. Anbringung der Gurtschlaufe erfolgt durch den Spalt zwischen dem zweiten Längsende des Unterteils und dem Oberteil, wodurch die Öffnung in der Befestigungsplatte für die Gurtschlaufe zugänglich ist.

Dabei kann vorgesehen sein, dass das Unterteil, insbesondere durch Biegen in eine Offenstellung und eine Schließstellung bewegbar ist. Dadurch wird beim Austauschen des Trägerelements bzw. Planlaufrollers die Öffnung zugänglich.

Zur Sicherung der Gurtschlaufe in der Öffnung der Befestigungsplatte ist Erfindungsgemäß ein Verschluss vorgesehen, der das Oberteil und das Unterteil im Bereich des zweiten Längsendes verbindet.

Der Verschluss kann eine Verschlussplatte aufweisen, die mit dem Längsende des Unterteils und mit dem Oberteil verbindbar oder verbunden ist. Zum Öffnen des Trägerelements bzw. des Planenlaufrollers wird die Verschlussplatte entfernt, wodurch die Öffnung zugänglich wird. Nach erfolgtem Austausch wird die Öffnung mittels der Verschlussplatte wieder verschlossen, so dass die Gurtschlaufe in der Öffnung der Befestigungsplatte sicher gehalten ist.

Der Verschluss kann Rastelemente umfassen, die am Unterteil und am Oberteil angeordnet und in der Schließstellung im Eingriff sind. Diese Ausführungsform ist besonders geeignet im Zusammenhang mit dem Unterteil, das in eine Schließ- und Offenstellung bewegbar ist, derart, dass sich in der Offenstellung ein Öffnungswinkel ergibt, der ausreicht, um die Gurtschlaufe zu entfernen. In der Schließstellung wird der Winkel wieder auf 0 Grad zurückgeführt, so dass die Teile wieder formschlüssig verbunden sind.

Dabei kann das zweite Längsende des Unterteils eine Rastnase aufweisen, die in der Schließstellung in eine Rastöffnung eingreift, die in einem Fortsatz ausgebildet ist, der mit dem Oberteil verbunden ist. Dadurch wird auf einfache Weise die Rastverbindung zwischen dem Oberteil und dem Unterteil realisiert. Dabei kann vorgesehen sein, dass die Rastelemente in der Schließstellung mit einem Sicherungsmittel, insbesondere einem Niet, fixierbar sind. Dadurch wird verhindert, dass die Rastverbindung ungewollt gelöst wird.

Bei einer weiteren bevorzugten Ausführungsform ist die Öffnung zur Halterung der Gurtschlaufe verstellbar, insbesondere höhenverstellbar. Durch die Verstellbarkeit, insbesondere die Höhenverstellbarkeit der Öffnung wird eine Änderung der Ortslage der Gurtschlaufe erreicht, die durch die Öffnung hindurchgeschlauft ist. Die Öffnung bzw. allgemein das Trägerelement sind somit an verschiedene Planen anpassbar. Beispielsweise ist es mit der verstellbaren Öffnung möglich, Toleranzabweichungen bei Planen zu kompensieren, die über die Verstellmöglichkeiten der Spannelemente an der Planenunterkante hinausgehen. Außerdem wird durch die verstellbare Öffnung das Nachjustieren der Plane ermöglicht, wenn sich der jeweilige Gurt im Gebrauch längt. Durch Verstellen der Öffnung kann die Längung des Gurtes nachträglich kompensiert werden.

Dabei kann vorgesehen sein, dass das Unterteil mit dem Oberteil in verschiedenen Höhenlagen verbindbar ist. Diese Ausführungsform bietet eine einfache Möglichkeit, die Verstellbarkeit der Öffnung zur Halterung der Gurtschlaufe zu realisieren. Die Höhenlage des Unterteils bestimmt dabei die Höhenlage der Gurtschlaufe und somit den Abstand zwischen der Gurtschlaufe und dem Außenrahmen des Aufbaus.

Die Erfindung umfasst ferner einen Nutzfahrzeugaufbau mit einem Trägerelement bzw. mit einem Planenlaufroller gemäß einem der vorstehend genannten Ausführungsbeispiele.

Die Erfindung wird nachfolgend anhand von Ausführungsbeispielen unter Bezug auf die beigefügten schematischen Zeichnungen näher erläutert. In diesen zeigen:
- Fig. 1: eine Seitenansicht eines Planenlaufrollers nach einem nicht beanspruchten Ausführungsbeispiel mit abnehmbarem Unterteil;
- Fig. 2: eine Seitenansicht des Planenlaufrollers gemäß Fig. 1, der mit einer Schiebeplane verbunden ist;
- Fig. 3: eine Seitenansicht eines Planenlaufrollers nach einem weiteren nicht beanspruchten Ausführungsbeispiel mit abnehmbarem Unterteil;
- Fig. 4: eine perspektivische Ansicht des Planenlaufrollers gemäß Fig. 3;
- Fig. 5: eine Seitenansicht eines Planenlaufrollers nach einem erfindungsgemäßen Ausführungsbeispiel, bei dem das Unterteil einseitig fest mit dem Oberteil verbunden ist;
- Fig. 6a: eine Seitenansicht eines Planenlaufrollers nach einem weiteren erfindungsgemäßen Ausführungsbeispiel, bei dem das Unterteil mit dem Oberteil durch eine Rastverbindung verschließbar ist;
- Fig. 6b: eine Seitenansicht eines Planenlaufrollers nach einem weiteren erfindungsgemäßen Ausführungsbeispiel mit einem modifizierten Rastverschluss;
- Fig. 6c: eine Seitenansicht eines Planenlaufrollers nach einem weiteren erfindungsgemäßen Ausführungsbeispiel, bei dem die Öffnung zur Halterung der Gurtschlaufe verstellbar ist;
- Fig. 7: eine Seitenansicht eines Planenlaufrollers nach dem Stand der Technik; und
- Fig. 8: eine Seitenansicht eines Planenlaufrollers gemäß einer bekannten Reparaturlösung.

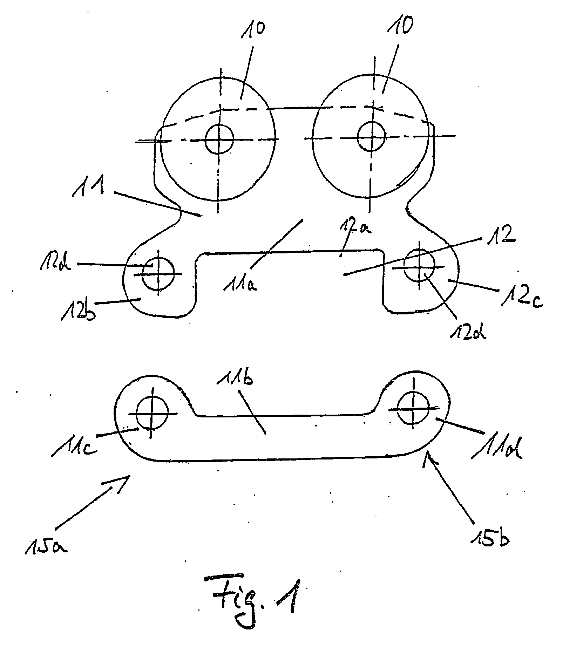

Fig. 1 stellt ein Beispiel für einen Planenlaufroller dar, der zum Verschieben von Schiebeplanen bei Seitenplanenfahrzeugen bzw. Curtainsidern zum Einsatz kommt. Die Erfindung ist nicht auf Planenlaufroller beschränkt, sondern umfasst allgemein Trägerelemente zur Lagerung von beweglichen Elementen eines Nutzfahrzeugaufbaus, wobei die Erfindung bei Planenlaufrollern besonders vorteilhaft ist. Wie in Fig. 1 zu erkennen, weist der Planenlaufroller zwei Rollen 10 (Tandemroller) auf. Es ist möglich, den Planenlaufroller mit nur einer Rolle oder auch mit mehr als zwei Rollen auszustatten. Je nach Ausführung des Holms, in dem der Planenlaufroller geführt ist, ist bspw. ein Doppeltandemroller mit vier Rollen möglich.

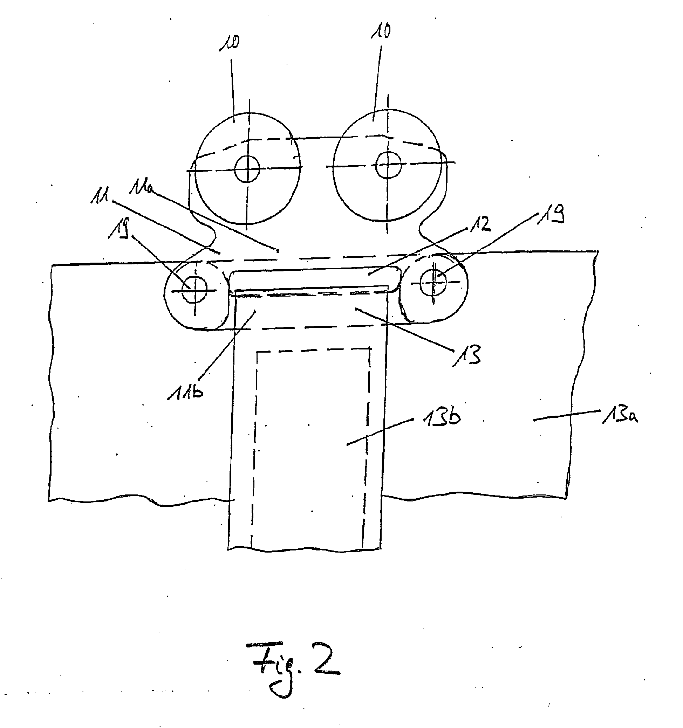

Die beiden Rollen 10 sind mit einer Befestigungsplatte 11 verbunden und drehbar gelagert. Dabei sind die beiden Rollen 10 in einem in der Einbaulage oberen Bereich der Befestigungsplatte 11 angeordnet. Die Befestigungsplatte 11 weist in einem in der Einbaulage unteren Bereich eine Öffnung 12 auf. Die Öffnung 12 dient, wie in Fig. 2 dargestellt, zur Halterung einer Gurtschlaufe 13, die durch die Öffnung 12 hindurchgezogen ist. Für die Aufnahme der Gurtschlaufe 13 ist die Öffnung 12 im Wesentlichen horizontal angeordnet und länglich ausgebildet, wobei die Länge der Öffnung 12 in etwa der Breite der Gurtschlaufe 13 entspricht bzw. etwas länger ist.

Wie in Fig. 1 gut zu erkennen, ist die Befestigungsplatte 11 im Bereich der Öffnung 12 teilbar, insbesondere horizontal teilbar. Dies bedeutet, dass die Öffnung 12 im geteilten Zustand (Fig. 1) zum Entfernen bzw. Anbringen der Gurtschlaufe zugänglich ist. Für die Teilbarkeit der Befestigungsplatte 11 im Bereich der Öffnung 12 weist diese ein Oberteil 11a und ein Unterteil 11b auf. Die beiden Rollen 10 sind am Oberteil 11a befestigt und ragen dabei etwas über den Umfang des Oberteils 11a hinaus. Eine andere Anordnung der Rollen 10 bzw. einer einzigen Rolle am Oberteil 11a ist möglich. Im montierten Zustand bildet das Unterteil 11b zusammen mit dem Oberteil 11a eine Öffnung 12 für die Gurtschlaufe 13 (Fig. 2). Dabei wird die in der Einbaulage obere Begrenzung der Öffnung 12 durch das Oberteil 11a und die untere Begrenzung der Öffnung 12 durch das Unterteil 11b gebildet. Das Oberteil 11a weist dazu eine längliche, sich im Wesentlichen in Fahrzeuglängsrichtung erstreckende Ausnehmung 12a auf, die nach unten hin (im demontierten Zustand) offen ist. Seitlich ist die Ausnehmung 12a durch zwei ösenförmige Fortsätze bzw. zwei Augen begrenzt, die sich in der Einbaulage nach unten erstrecken. In den beiden ösenförmigen Fortsätzen 12b, 12c ist jeweils eine Bohrung 12d vorgesehen, die zur Befestigung des Unterteils 11b dient.

Das Unterteil 11b erstreckt sich parallel zum Oberteil 11a. Wie in Fig. 1 zu erkennen, ist das Unterteil 11b bügelförmig bzw. in Form eines Bügels ausgebildet und dient als Längsabschlussteil der Befestigungsplatte 11. An den beiden Längsenden 15a, 15b des Unterteils 11b bzw. des Längsabschlussteils sind zwei Augen 11c, 11d mit entsprechenden Bohrungen vorgesehen, die im montierten Zustand mit den beiden Bohrungen 12d der ösenförmigen Fortsätze 12b, 12c am Oberteil 11a fluchten.

Wie in Fig. 2 dargestellt, ist das Unterteil durch mechanische Verbindungsmittel 19 mit dem Oberteil 11a abnehmbar verbunden. Bei den Verbindungsmitteln 19 handelt es sich um Nieten, insbesondere um Senknieten, die in den Bohrungen der Augen 11c, 11d bzw. den Bohrungen 12d der ösenförmigen Fortsätze 12b, 12c angeordnet sind. Andere mechanische Verbindungsmittel sind möglich.

In Fig. 2 ist ferner zu erkennen, dass das Unterteil auf der in Einbaulage äußeren Seite des Planenlaufrollers angeordnet ist, damit der Planenlaufroller ungehindert am Aufbau entlang bewegt werden kann. Die Rollen 10 sind an der in der Einbaulage inneren Seite des Planenlaufrollers befestigt und befinden sich im montierten Zustand des Planenlaufrollers in dafür vorgesehenen Schienen, die an den Längsholmen des Aufbaus ausgebildet sind (nicht dargestellt). Eine andere Anordnung des Unterteils 11b am Oberteil 11a ist möglich, je nach Platzbedarf und Ausführung des Längsholmes, in dem die Führungsschiene für den Roller ausgebildet ist.

Im verbundenen Zustand (Fig. 2) durchgreift die Gurtschlaufe 13 die Öffnung 12 in der Befestigungsplatte 11 und ist in dieser sicher gehalten. Die Gurtschlaufe 13 bildet dabei das Ende eines Gurtes 13b, der mit der Seitenplane 13a vernäht ist. Auf diese Weise ist die Seitenplane 13a bzw. Schiebeplane über den Gurt 13b sicher mit der Befestigungsplatte 11 des Planenlaufrollers verbunden.

Der Austausch des Planenlaufrollers gemäß Fig. 7 erfolgt dadurch, dass die Gurtschlaufe 13 freigeschnitten, bzw. anderweitig vom Planenlaufroller entfernt wird, ohne dabei die Gurtschlaufe zu zerstören. Die freie Gurtschlaufe 13 wird dann mit der geteilten Befestigungsplatte 11 des Planenlaufrollers gemäß Fig. 2 verbunden. Dazu wird das Unterteil 11b in die Gurtschlaufe 13 eingeführt und mit dem Oberteil 11a durch die mechanischen Verbindungsmittel 19 bzw. Nieten verbunden. Die in Fig. 2 dargestellte Nietverbindung ermöglicht eine sichere und feste Verbindung des Unterteils 11b mit dem Oberteil 11a, die überdies zu nachfolgenden Reparaturzwecken relativ einfach mittels geeigneter, an sich bekannter Werkzeuge gelöst werden kann, so dass das Unterteil 11b vom Oberteil 11a bei Bedarf wieder abgenommen werden kann.

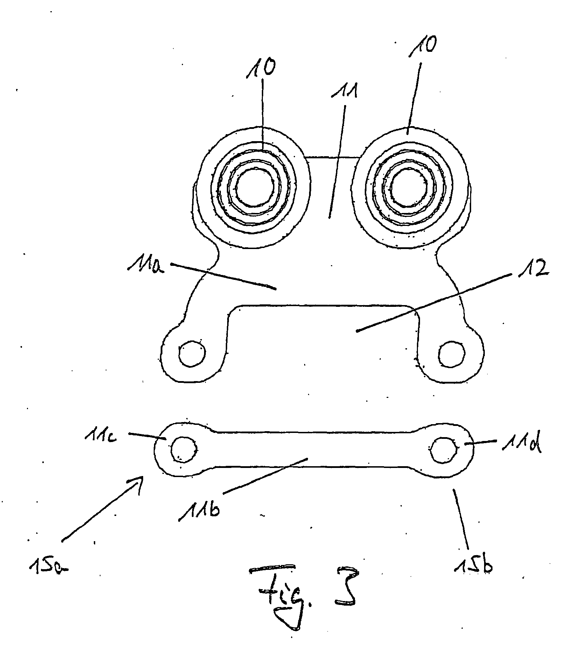

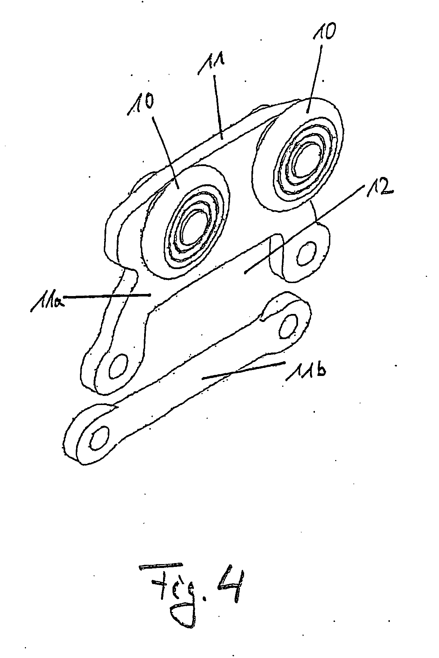

Weitere Ausführungsbeispiele, die alle auf dem Prinzip beruhen, dass die Befestigungsplatte 11 im Bereich der Öffnung 12 teilbar ist, sind in den Figuren 3 bis 6b dargestellt.

Der Planenlaufroller gemäß Fig. 3 weist ebenso wie der Planenlaufroller gemäß den Figuren 1, 2 ein abnehmbares Unterteil auf, das im montierten Zustand durch mechanische Verbindungsmittel 19, insbesondere durch Nieten, mit dem Oberteil verbunden ist. Im Unterschied zu dem Unterteil gemäß Fig. 1 sind die an den Längsenden 15a, 15b vorgesehenen Augen 11c, 11d achsensymmetrisch ausgebildet, wohingegen die Augen 11c, 11d gemäß Fig. 1 etwas nach oben gerichtet sind. Dadurch weist das Unterteil gemäß Fig. 1 ein U-förmiges Profil auf. Das Unterteil gemäß Fig. 3 weist dagegen ein knochenförmiges Profil auf.

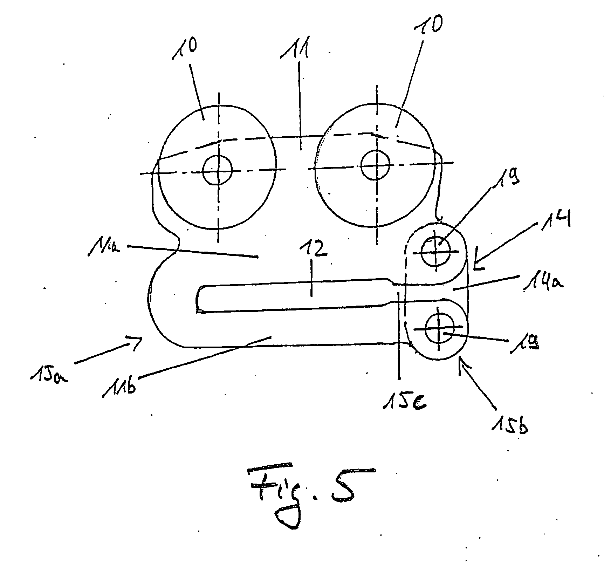

Der Planenlaufroller gemäß Fig. 5 unterscheidet sich von den beiden Planenlaufrollern gemäß Figuren 1 bis 4 dadurch, dass das Unterteil 11b fest mit dem Oberteil 11a verbunden ist. Konkret ist das erste Längsende 15a des Unterteils 15b fest mit dem Oberteil 11a verbunden. Dabei bilden das Unterteil 11b und das Oberteil 11a im Bereich der Verbindungsstelle einen gekrümmten Verbindungsarm, der die Öffnung 12 seitlich begrenzt. Eine andere Ausgestaltung der Verbindungsstelle ist möglich. Das zweite andere Längsende 15b des Unterteils 11b bildet zusammen mit dem Oberteil 11a einen Spalt 15c, der in die Öffnung 12 seitlich mündet. Der Spalt 15c ist wie die Öffnung 12 ebenfalls horizontal angeordnet und bildet eine Verlängerung der Öffnung 12 in horizontaler Richtung.

Dadurch ist die Öffnung zum Entfernen bzw. zum Anbringen der Gurtschlaufe 13 zugänglich.

Das Unterteil 11b ist mit dem Oberteil 11a durch einen Verschluss 14 verbunden, der im Bereich des zweiten Längsendes 15b des Unterteils 11b angeordnet ist. Der Verschluss 14 bildet somit eine seitliche Begrenzung der Öffnung 12, die der Verbindungsstelle zwischen dem Unterteil 11b und dem Oberteil 11a im Bereich des ersten Längsendes 15a gegenüber angeordnet ist.

Bei dem Ausführungsbeispiel gemäß Fig. 5 ist der Verschluss als Verschlussplatte 14a ausgeführt, die das zweite (freie) Längsende 15b des Unterteils 11b mit dem Oberteil 11a verbindet. Die Verbindung der Verschlussplatte mit dem Unterteil 11b und dem Oberteil 11a erfolgt mechanisch, beispielsweise durch Nieten 19.

Die Verschlussplatte 14a ist dabei so gestaltet, dass diese die Augen, in denen die Bohrungen für die Nieten 19 vorgesehen sind, bündig überdeckt.

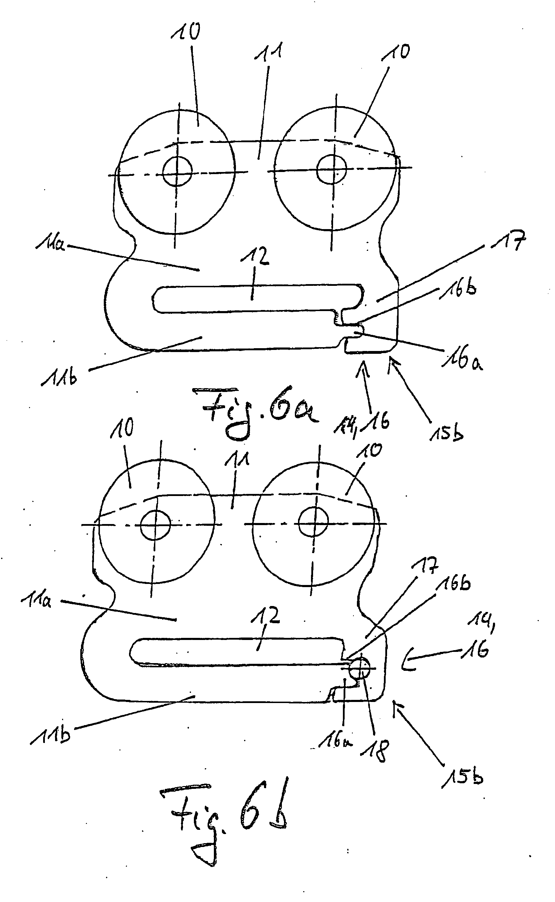

Die beiden Ausführungsbeispiele gemäß Figuren 6a, 6b basieren auf einem ähnlichen Prinzip, wie das Ausführungsbeispiel gemäß Fig. 5, insofern als diese ebenfalls jeweils fest mit dem Oberteil 11a verbundene Unterteile 11b aufweisen. Im Hinblick auf die Beschreibung der Anbindung des Unterteils 11b am Oberteil 11a wird auf den Planenlaufroller gemäß Fig. 5 verwiesen.

Um die Öffnung 12 für die Gurtschlaufe 13 zugänglich zu machen, ist das Unterteil 11b so angepasst, dass dieses in eine Offenstellung verschwenkt werden kann, indem das Unterteil 11b zur Seite hin aufgebogen wird. Dazu ist die Verbindungsstelle im Bereich des ersten Längsendes 15a entsprechend ausgelegt. Durch das seitliche Verbiegen des Unterteils 11b werden die nachfolgend beschriebenen Rastelemente 16 entkoppelt, wodurch der Spalt 15c gebildet bzw. vergrößert wird, so dass die Öffnung 12 gut zugänglich ist. Zum Verschließen der Öffnung 12 wird das Unterteil 11b wieder zurück gebogen, so dass dieses die in den Fig. 6a, 6b dargestellte Stellung einnimmt und die Rastelemente 16 verrasten bzw. das Oberteil 11a und das Unterteil 11b formschlüssig verbunden sind. Die Verbindungsstelle kann auch als Gelenk ausgeführt sein.

Der Planenlaufroller gemäß Fig. 6a unterscheidet sich vom Planenlaufroller gemäß Fig. 5 ferner durch die Form des Verschlusses 14. Der Verschluss 14 gemäß Fig. 6a ist als Rastverbindung mit Rastelementen 16 ausgeführt. Die Rastelemente 16 sind einerseits am Unterteil 11b und andererseits am Oberteil 11a angeordnet und befinden sich in der Schließstellung im Eingriff, wie in Fig. 6a dargestellt. Die Teilung im Bereich der Öffnung 12 erfolgt bei dem Ausführungsbeispiel gemäß Fig. 6a in vertikaler Richtung zwischen einer Stirnfläche des Unterteils 11b und einem Fortsatz 17, der mit dem Oberteil 11a verbunden ist. Der Fortsatz 17 bildet dabei die seitliche Begrenzung der Öffnung 12. Konkret umfasst die Rastverbindung gemäß Fig. 6a eine Rastnase 16a, die am Unterteil 11b, insbesondere am zweiten freien Längsende 15b des Unterteils 11b vorgesehen ist.

Die Rastnase 16a erstreckt sich im Wesentlichen in horizontaler Richtung und bildet eine Verlängerung des Unterteils 11b. Der Rastnase 16a ist eine Rastöffnung 16b zugeordnet, die im Fortsatz 17 ausgebildet und zum Unterteil 11b hin geöffnet ist.

Es ist auch möglich, dass die Rastelemente 16 so ausgebildet sind, dass die Rastnase am Fortsatz 17 und die Rastöffnung im Unterteil 11b ausgebildet ist. Eine andere Anordnung der Rastelemente 16 ist ebenfalls möglich.

Der Planenlaufroller gemäß Fig. 6b basiert auf dem Planenlaufroller gemäß Fig. 6a und weist zusätzlich ein Sicherungsmittel 18 auf, das die beiden Rastelemente 16 in der Schließstellung fixiert. Das Sicherungsmittel 18 ist als Niet ausgeführt, der im Bereich der Rastnase 16a angeordnet ist und das Unterteil 11b mit dem Oberteil 11a verbindet. Zum Öffnen der Rastverbindung, wird der Niet 18 mit einem geeigneten Werkzeug entfernt, die Rastverbindung gelöst und das Unterteil 11b zur Seite hin gebogen. Zum Montieren wird das Unterteil 11b, nachdem die Gurtschlaufe eingezogen ist, in die Schließstellung gebogen, bis die Rastverbindung verrastet, die dann mittels des Niet 18 gesichert wird.

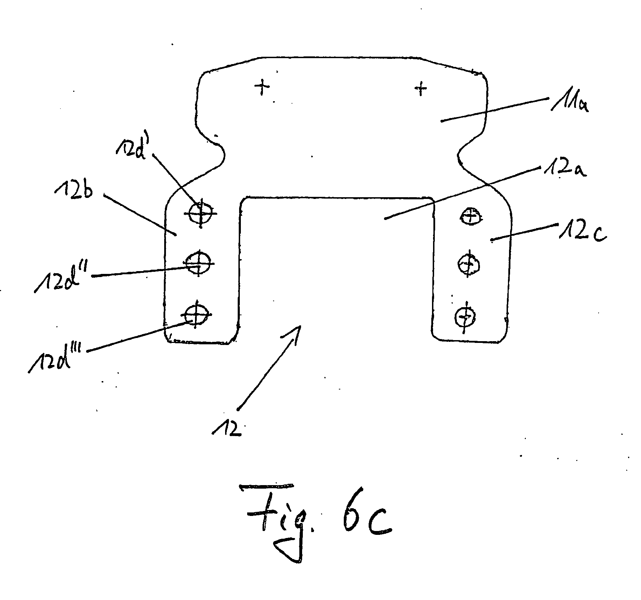

Ein weiteres Ausführungsbeispiel eines erfindungsgemäßen Planenlaufrollers ist in Fig. 6c dargestellt. Dieses Ausführungsbeispiel basiert auf dem teilbaren Planenlaufroller gemäß Fig. 1 bzw. gemäß Fig. 3. Das bedeutet, dass, wie bei den Planenlaufrollern gemäß Figuren 1, 3 die Befestigungsplatte 11 im Bereich der Öffnung 12 vollständig teilbar bzw. geteilt ist derart, dass das Oberteil 11a und das Unterteil 11b (in Fig. 6c nicht dargestellt) voneinander trennbar sind. Insofern eignet sich der Planenlaufroller gemäß Fig. 6c ebenfalls als Reparaturlösung. Darüber hinaus weist der Planenlaufroller gemäß Fig. 6c noch eine weitere Funktion auf und ist so ausgestaltet, dass die Öffnung 12 verstellbar ist. Die Verstellbarkeit der Öffnung wird dadurch erreicht, dass die beiden ösenförmigen Fortsätze 12b, 12c nach unten, d.h. in vertikaler Richtung in der Einbaulage verlängert sind. Im Bereich der Öffnung 12 bzw. der Ausnehmung 12a im Oberteil 11a sind für die Verstellbarkeit der Öffnung 12 Verstellmittel vorgesehen, die bei dem Ausführungsbeispiel gemäß Fig. 6c mehrere übereinander angeordnete Bohrungen 12d', 12d'', 12d''' umfassen. Die Bohrungen 12d', 12d'', 12d''' sind symmetrisch in beiden Fortsätze 12b, 12c vorgesehen. Dabei sind die jeweils zugehörigen Bohrungen in den Fortsätze 12b, 12c auf gleicher Höhe bzw. horizontal angeordnet. Andere Verstellmittel, beispielsweise vertikal sich erstreckende Langlöcher, insbesondere mit verschiedenen Rastmöglichkeiten, sind denkbar.

Bei dem Planenlaufroller gemäß Fig. 6c sind die ösenförmigen Fortsätze 12b, 12c derart verlängert, dass wenigstens zwei, insbesondere drei oder mehr Bohrungen 12d', 12d'', 12d''' übereinander, insbesondere vertikal übereinander vorgesehen sind. Die Fortsätze 12b, 12c begrenzen seitlich dabei, wie bei den Ausführungsbeispielen gemäß Fig. 1, 3 die Ausnehmung 12a bzw. die Öffnung 12.

Das Unterteil 11b (nicht dargestellt) kann mit den verschiedenen Bohrungen 12d', 12d'', 12d''' in verschiedenen Höhenlagen verbunden werden. Dadurch ist die untere Begrenzung der Öffnung 12 in verschiedenen Positionen einstellbar, so dass die Höhenlage der durch die Öffnung 12 hindurchgeschlauften Gurtschlaufe 13 (nicht dargestellt) verstellbar ist.

Dies hat den Vorteil, dass beispielsweise Toleranzabweichungen in der Planenhöhe durch Verstellen der Öffnung 12 kompensiert werden können. Der Planenlaufroller gemäß Fig. 6c eignet sich für den Einbau als Originalroller. Wenn einzelne Gurte durch den Gebrauch übermäßig gelängt werden, kann der Planenlaufroller gemäß Fig. 6c auch als Reparaturlösung eingesetzt werden, um die Längung des jeweiligen Gurtes auszugleichen.

Ergänzend ist anzumerken, dass die Rollen bei dem Planenlaufroller gemäß Fig. 6c aus Gründen der Einfachheit nicht dargestellt sind.

Die Planenlaufroller gemäß den Figuren 1 bis 6b ermöglichen einen einfachen Austausch, ohne dass dabei die Gurtschlaufe zerstört werden muss. Außerdem sind keine speziellen Reparaturlaufroller erforderlich, die mit dem Gurt bzw. mit der Seitenplane vernietet werden, sondern ein einheitlicher horizontal oder vertikal teilbarer Planenlaufroller wird eingesetzt, der bei Bedarf ausgetauscht werden kann. Die Kraftübertragung von der Seitenplane über den Gurt 13b auf den Planenlaufroller wird durch die Austauschbarkeit des Rollers nicht beeinträchtigt. Der Planenlaufroller gemäß Fig. 6c ist überdies an verschiedene Planen bzw. Toleranzabweichungen von Planen anpassbar, da die Öffnung 12 des Planenlaufrollers höhenverstellbar ist.

Die Erfindung umfasst auch einen Nutzfahrzeugaufbau und ein Nutzfahrzeug mit einem derartigen Planenlaufroller.

### Bezugszeichenliste

- 10: Rolle
- 11: Befestigungsplatte
- 11a: Oberteil
- 11b: Unterteil
- 11c, 11d: Augen
- 12: Öffnung
- 12a: Ausnehmung
- 12b, 12c: ösenförmige Fortsätze
- 12d: Bohrung
- 13: Gurtschlaufe
- 13a: Seitenplane
- 13b: Gurt
- 14: Verschluss
- 14a: Verschlussplatte
- 15a, 15b: Längsenden
- 15c: Spalt
- 16: Rastelemente
- 16a: Rastnase
- 16b: Rastöffnung
- 17: Fortsatz
- 18: Sicherungsteil
- 19: Verbindungsmittel

## Patentansprüche

1. Trägerelement für bewegliche Elemente eines Nutzfahrzeugaufbaus, insbesondere Planenlaufroller für Schiebeplanen (13a), mit wenigstens einer Rolle (10), die mit einer Befestigungsplatte (11) verbunden ist, wobei die Befestigungsplatte (11) eine Öffnung (12) zur Halterung einer Gurtschlaufe (13) aufweist, die Befestigungsplatte (11) im Bereich der Öffnung (12) teilbar oder geteilt ist und die Befestigungsplatte (11) ein Oberteil (11a) und ein Unterteil (11b) aufweist, wobei die wenigstens eine Rolle (10) am Oberteil (11a) befestigt ist und das Unterteil (11b) zusammen mit dem Oberteil (11a) die Öffnung (12) für die Gurtschlaufe (13) bildet, und wobei ein erstes Längsende (15a) des Unterteils (11b) fest mit dem Oberteil (11a) verbunden ist und ein zweites Längsende (15b) einen Spalt (15c) mit dem Oberteil (11a) bildet,
**dadurch gekennzeichnet, dass**
ein Verschluss (14) das Oberteil (11a) und das Unterteil (11b) im Bereich des zweiten Längsendes (15b) verbindet.

2. Trägerelement, insbesondere Planenlaufroller, nach Anspruch 1,
**dadurch gekennzeichnet, dass**
das Unterteil (11b) bügelförmig ausgebildet ist.

3. Trägerelement, insbesondere Planenlaufroller, nach Anspruch 1 oder 2,
**dadurch gekennzeichnet, dass**
das Unterteil (11b), insbesondere durch Aufbiegen, in eine Offenstellung und in eine Schließstellung bewegbar ist.

4. Trägerelement, insbesondere Planenlaufroller, nach einem der Ansprüche 1 bis 3,
**dadurch gekennzeichnet, dass**
der Verschluss (14) eine Verschlussplatte (14a) aufweist, die mit dem zweiten Längsende (15b) des Unterteils (11b) und mit dem Oberteil (11a) verbindbar oder verbunden ist.

5. Trägerelement, insbesondere Planenlaufroller, nach einem der Ansprüche 1 bis 3,
**dadurch gekennzeichnet, dass**
der Verschluss (14) Rastelemente (16) umfasst, die am Unterteil (11b) und am Oberteil (11a) angeordnet und in der Schließstellung im Eingriff sind.

6. Trägerelement, insbesondere Planenlaufroller, nach Anspruch 5,
**dadurch gekennzeichnet, dass**
das zweite Längsende (15b) des Unterteils (11b) eine Rastnase (16a) aufweist, die in der Schließstellung in eine Rastöffnung (16b) eingreift, die in einem Fortsatz (16) ausgebildet ist, der mit dem Oberteil (11a) verbunden ist.

7. Trägerelement, insbesondere Planenlaufroller, nach Anspruch 5 oder 6,
**dadurch gekennzeichnet, dass**
die Rastelemente (16) in der Schließstellung mit einem Sicherungsmittel (18), insbesondere einem Niet, fixierbar sind.

8. Trägerelement, insbesondere Planenlaufroller, nach wenigstens einem der Ansprüche 1 bis 5,
**dadurch gekennzeichnet, dass**
die Öffnung (12) zur Halterung der Gurtschlaufe (13) verstellbar, insbesondere höhenverstellbar ist.

9. Trägerelement, insbesondere Planenlaufroller, nach Anspruch 8,
**dadurch gekennzeichnet, dass**
das Unterteil (11b) mit dem Oberteil (11a) in verschiedenen Höhenlagen verbindbar ist.

10. Nutzfahrzeugaufbau mit einem Trägerelement, insbesondere einem Planenlaufroller, gemäß einem der Ansprüche 1 bis 9.

## Claims

1. Carrier element for movable elements of a utility vehicle superstructure, especially tarpaulin rollers for sliding tarpaulins (13a), having at least one roller (10) which is connected to a fixing plate (11), wherein the fixing plate (11) has an opening (12) for holding a strap loop (13), the fixing plate (11) is divisible or divided in the region of the opening (12) and the fixing plate (11) has an upper part (11 a) and a lower part (11 b), wherein the at least one roller (10) is fixed to the upper part (11 a), and the lower part (11 b) together with the upper part (11 a) forms the opening (12) for the strap loop (13), and wherein a first longitudinal end (15a) of the lower part (11b) is fixedly connected to the upper part (11 a) and a second longitudinal end (15b) forms a slot (15c) with the upper part (11 a),
**characterised in that**
a closure (14) connects the upper part (11a) and the lower part (11b) in the region of the second longitudinal end (15b).

2. Carrier element, especially a tarpaulin roller, according to claim 1,
**characterised in that**
the lower part (11 b) is of bow-shaped construction.

3. Carrier element, especially a tarpaulin roller, according to claim 1 or 2,
**characterised in that**
the lower part (11 b) is movable, especially by bending, into an open position and into a closed position.

4. Carrier element, especially a tarpaulin roller, according to any one of claims 1 to 3,
**characterised in that**
the closure (14) has a closure plate (14a) which is connectible or connected to the second longitudinal end (15b) of the lower part (11b) and to the upper part (11 a).

5. Carrier element, especially a tarpaulin roller, according to any one of claims 1 to 3,
**characterised in that**
the closure (14) comprises locking elements (16) which are arranged on the lower part (11b) and on the upper part (11 a) and are engaged in the closed position.

6. Carrier element, especially a tarpaulin roller, according to claim 5,
**characterised in that**
the second longitudinal end (15b) of the lower part (11b) has a locking lug (16a) which in the closed position engages in a locking opening (16b) that is formed in an extension piece (16) connected to the upper part (11 a).

7. Carrier element, especially a tarpaulin roller, according to claim 5 or 6,
**characterised in that**
the locking elements (16) are fixable in the closed position with a securing means (18), especially a rivet.

8. Carrier element, especially a tarpaulin roller, according to at least one of claims 1 to 5,
**characterised in that**
the opening (12) for holding the strap loop (13) is adjustable, especially adjustable in height.

9. Carrier element, especially a tarpaulin roller, according to claim 8,
**characterised in that**
the lower part (11 b) is connectible to the upper part (11 a) at different height positions.

10. Utility vehicle superstructure having a carrier element, especially a tarpaulin roller, in accordance with any one of claims 1 to 9.

## Revendications

1. Elément de support pour éléments mobiles d'une carrosserie de véhicule utilitaire, en particulier enrouleur de guidage de bâche pour bâches coulissantes (13a), pourvu d'au moins une poulie (10) qui est reliée à une plaque de fixation (11), la plaque de fixation (11) présentant une ouverture (12) destinée à retenir une boucle de ceinture (13), la plaque de fixation (11) dans la zone de l'ouverture (12) pouvant être divisée ou étant divisée et la plaque de fixation (11) comprenant une partie supérieure (11 a) et une partie inférieure (11b), la au moins une poulie (10) étant fixée sur la partie supérieure (11a) et la partie inférieure (11 b) formant conjointement avec la partie supérieure (11a) l'ouverture (12) pour la boucle de ceinture (13), et une première extrémité longitudinale (15a) de la partie inférieure (11b) étant assemblée solidement avec la partie supérieure (11a) et une seconde extrémité longitudinale (15b) formant une fente (15c) avec la partie supérieure (11a),
**caractérisé en ce**
**qu'**une fermeture (14) relie la partie supérieure (11a) et la partie inférieure (11b) dans la zone de la seconde extrémité longitudinale (15b).

2. Elément de support, en particulier enrouleur de guidage de bâche, selon la revendication 1,
**caractérisé en ce**
**que** la partie inférieure (11b) est réalisée sous la forme d'un étrier.

3. Elément de support, en particulier enrouleur de guidage de bâche, selon la revendication 1 ou 2,
**caractérisé en ce**
**que** la partie inférieure (11 b) peut passer dans une position d'ouverture et dans une position de fermeture, en particulier par dépliage.

4. Elément de support, en particulier enrouleur de guidage de bâche, selon l'une quelconque des revendications 1 à 3,
**caractérisé en ce**
**que** la fermeture (14) présente une plaque de fermeture (14a) pouvant être reliée ou reliée à la seconde extrémité longitudinale (15b) de la partie inférieure (11b) et à la partie supérieure (11a).

5. Elément de support, en particulier enrouleur de guidage de bâche, selon l'une quelconque des revendications 1 à 3,
**caractérisé en ce**
**que** la fermeture (14) comprend des éléments d'encliquetage (16) qui sont disposés sur la partie inférieure (11 b) et sur la partie supérieure (11a) et qui sont en prise dans la position de fermeture.

6. Elément de support, en particulier enrouleur de guidage de bâche, selon la revendication 5,
**caractérisé en ce**
**que** la seconde extrémité longitudinale (15b) de la partie inférieure (11b) présente un ergot d'encliquetage (16a) qui, dans la position de fermeture, s'insère dans une ouverture d'encliquetage (16b), laquelle est ménagée dans un prolongement (16) qui est relié à la partie supérieure (11a).

7. Elément de support, en particulier enrouleur de guidage de bâche, selon la revendication 5 ou 6,
**caractérisé en ce**
**que** les éléments d'encliquetage (16), dans la position de fermeture, peuvent être fixés à l'aide d'un moyen de blocage (18), en particulier d'un rivet.

8. Elément de support, en particulier enrouleur de guidage de bâche, selon au moins l'une des revendications 1 à 5,
**caractérisé en ce**
**que** l'ouverture (12) destinée à retenir la boucle de ceinture (13), est réglable, en particulier réglable en hauteur.

9. Elément de support, en particulier enrouleur de guidage de bâche, selon la revendication 8,
**caractérisé en ce**
**que** la partie inférieure (11 b) peut être reliée à la partie supérieure (11a) dans différentes positions en hauteur.

10. Carrosserie de véhicule utilitaire comprenant un élément de support, en particulier un enrouleur de guidage de bâche, selon l'une des revendications 1 à 9.
